# EUROPEAN PATENT SPECIFICATION

(11) **EP 1 805 976 B1**
(45) Date of publication and mention of the grant of the patent: **05.05.2010**
(21) Application number: 04769714.9
(22) Date of filing: 25.10.2004
(51) Int. Cl.: H04M 1/60, B60R 11/02

(54) **HANDS-FREE UNIT FOR A VEHICLE WITH AN ADJUSTABLE MICROPHONE**
FREIHAND-EINHEIT FÜR EIN FAHRZEUG MIT JUSTIERBAREM MIKROPHON
UNITE MAINS LIBRES POUR VEHICULE POURVUE D'UN MICROPHONE REGLABLE

(43) Date of publication of application: 11.07.2007
(73) Proprietor: Nokia Corporation, 02150 Espoo (FI)
(72) Inventor: MUTTSCHALL, Jens, 46514 Schermbeck (DE); MEIERLING, Klaus-Dieter, 59889 Eslohe-Reiste (DE)
(74) Representative: Becker Kurig Straus
(86) International application number: PCT/IB2004/003484
(87) International publication number: WO 2006/046085

(56) References cited:
- EP-A1- 0 624 046
- EP-A1- 0 660 639
- EP-A1- 1 206 161
- US-A- 5 313 514
- US-A- 5 546 458
- US-A1- 2002 102 002
- US-B1- 6 304 764

## Description

The present invention relates to the field of hands-free units for cellular phone communication in vehicles. The present invention relates to the field of hands-free units provided with a microphone. It also relates to a solution for hands-free units for vehicles which are available for left and right hand driving installations. More specifically the invention relates to a hands-free units provided with a microphone that can be oriented for use from the drivers and passengers seat.

At present there are different concepts available for hands-free units of vehicles.

Conventionally a vehicle hands-free unit for a cellular phone comprises a cradle to hold a cellular telephone in an easily accessible position to enable taking and making calls. More sophisticated embodiments to state of the art hands-free units are provided with chargers, connections to an onboard power supply and external loudspeakers and microphones.

Such a telephone holder is e.g. disclosed in document EP 0 447 715. In this document a cradle for a car telephone is shown that can be oriented in a direction towards the driver seat or towards the passenger seat. This is achieved by an inclined cradle element that can be coupled in two different positions to the hands-free unit.

Hands-free units have been coupled to an onboard audio system to increase the quality of the audio output and to economize the loudspeaker of the hands-free unit and to prevent that the user/driver has to turn off the radio when receiving a telephone call.

Other embodiments of hands-free units are provided with an external microphone that can be directed to the mouth of a user to increase the quality of audio signals. Such a moveable external microphone mounting arm assembly is e.g. disclosed in document WO96/31994. When using external microphones a cable is required to connect the microphone to the hands-free unit. Due to the high grade of integration in modem vehicles it is nearly impossible to accommodate these additional cables in an unobtrusive way. Conventional hands-free devices with external microphones are usually installed in the center console or the glove box.

Hands-free units have been coupled to onboard audio systems to increase the quality of the audio output and to prevent that the user/driver has to turn off the radio when receiving a telephone call.

Additionally, following disclosures are of particular relevance to the subject-matter of the invention:

Document US 5 546 458 describes a hand-free communication apparatus utilizing a plurality of fixed microphones to allow simultaneous communication by several persons. A directional microphone is not described.

Document US 2002/0102002 describes a speech recognition system for vehicles where the single microphone is able to employ dynamic and electronic beam forming technology in order to obtain a directed reception of speech.

Document US 5 313 514 is related to a hands-free device having a directivity microphone incorporated into a plug for a cigar lighter socket. The microphone may be directed towards the driver using a directivity adjusting mechanism.

Document EP 0 660 639 provides a directive microphone for a car hands-free unit by mounting a microphone on a ball head that is movable within a housing element.

Document EP 1 206 161 describes an array of several microphones in a hand free kit, where the directional characteristic of the microphone array may be selected automatically based on an analysis of received audio signals in a circuit.

Document EP 0 624 046 describes a hands-free unit with two symmetrically aligned directional microphones pointing in different directions, and where a difference signal from both microphones is used in order to increase signal quality.

All the above approaches for hands-free units for vehicles have in common that they are not fully suitable with the use of mobile terminal devices as mobile phones, or handheld communicators in vehicles and cannot fully enable the use and operation of the hands-free unit from the driver seat as well as from the passenger seat. Therefore, an improved arrangement for a hands-free unit for vehicles is desired that is suitable for right hand side and left hand side driven vehicles. It is also desirable to have a hands-free unit for a vehicle that can be used by the driver and by the passenger. It is also desirable to have a hands-free unit for vehicles with an improved sound and speech pick up system to suppress background noise.

According to a first aspect of the present invention a hands-free unit for use with communication devices in vehicles is provided. The hands-free unit comprises a housing , an interface for connecting a cellular phone and a directional microphone.

The housing can protect the internal parts of the hands-free unit from environmental influences. Additionally, the housing can be designed to fit the design principles of different types of vehicles.

The hands-free unit is provided with an interface for connecting a cellular phone. The expression "cellular phone" is used in the text in the sense of any kind of mobile voice communication means, such as GSM telephones, UMTS mobile phones, i-mode phones, communicators, game phones and the like.

The interface can be e.g. a mechanic interface for mechanically connecting a cellular phone to said housing. This can be embodied as a cradle for a cellular phone. The mechanical interface may be embodied as an adapter for mechanically connecting different kinds or types of cellular phones to said hands-free unit. It may also be mentioned that the interface can be embodied as a connector to electrically connect to said cellular telephone. Such an interface may comprise an electric connector for plugging an adapter or connector cable. It may also be noted that the interface may be incorporated as an air interface for exchanging data e.g. via an infrared and/or a radio communication interface such as e.g. Bluetooth or e.g. W-LAN. It is also envisaged to provide a radio frequency interface to the hands-free unit. By using a radio frequency interface the hands-free device may also serve as a relay station to reduce the radio frequency power emitted inside the vehicle. The radio interface can be embodied as e.g. a near-field air-interface i.e. as a capacitative coupler or as an inductive coupler in said cradle element positioned in close proximity to an antenna structure of a cellular telephone in said cradle.

The directional microphone is connected to said interface for connecting a cellular phone and said directional microphone is accomodated in said housing. The directional microphone is an acousto electric transducer with a directional pick-up characteristic. The expression "directional pick-up characteristic refers to a pick-up characteristic within e.g. one octant, or within an volume of a cone with an angle of maximal 45° degrees between the symmetry axis and the surface of the cone. It is also envisaged to employ a directional microphone with a pick-up characteristic that is not rotationally symmetric or not mirror-symmetric.

The housing of the hands-free unit comprises a first housing component and a second housing component, wherein a main circuit board is arranged in said first housing component and said directional microphone is arranged in said second housing component.

Said first housing component is provided with a sensor (i.e. a switch) to determine the present pivot position of said pivotable second housing component and said determined pivot position is used to activate the hands-free unit. That is, the hands-free unit is provided with a component to determine the pivot position of the second housing component and to control the operation of the hands-free unit accordingly.

The hands-free unit is intended to be installed inside the car and to be visible. This is due to the fact that directional microphones require a nearly unobstructed acoustic path to the position a speaker is expected to be.

In an example embodiment of the present invention said hands-free unit is provided with a main circuit board arranged in said housing. The main circuit board and said directional microphone are accomodated in said housing. Said directional microphone is at least electrically connected to said main circuit board. The main circuit board can comprise e.g. a processing unit, amplifiers and electical connectors, voltage transformers, power adaptors, fuses, volume controls and indication lights.

In an example embodiment of the present invention said hands-free unit is provided with a component to orient a pick-up characteristic of said microphone in a direction to the driver seat or in a direction to the passenger seat In a simple embodiment the directional microphone can be mounted e.g. pivotably or movably in said housing. However it may be possible to change only the orientation of the maximum of the angular area with the highest sensitivity of the microphone into the direction of where it is expected that the head of a driver or a passenger is located. That is, this embodiment is enabled to direct the pick-up characteristic approximately to the area of a headrest of the driver seat or passenger seat. This may be achieved by a movable directional microphone, by a movable acoustic system, by two different switchable directional microphones or by a phased array microphone with an adaptive pick-up characteristic.

In another example embodiment of said hands-free unit said directional microphone is orientable. Said orientable directional microphone results in an orientable pick-up characteristic. This may be embodied e.g. as a movable microphone mounted on a slider. A slider might be implemented with a curved slidepath.

As stated above, the housing of the hands-free unit comprises a first housing component and a second housing component, wherein said main circuit board is arranged in said first housing component and said directional microphone is arranged in said second housing component.

In another example embodiment said second housing component is pivotable around an axis within an angle of at least 90° and not more than 270°. It is also additionally envisaged to implement a pivot angle of substantially 180°. The pivot axis can be a component of the housing or can be an axis of rotation. The pivot axis can be oriented in the horizontal plane of the vehicle when the hands-free unit is installed. It is also contemplated to use a vertical pivot axis. It is also envisaged to orient the pivot axis substantially in the longitudinal direction of the vehicle. In this case it is possible to place e.g. a cradle for a mobile telephone in front of the pivot axis.

The pivotability is used to achieve that the microphone can be aligned optimally in a direction to the driver, in the case of vehicles with steering column at the left side as well as for vehicles with the steering column on the right side. The invention also enables the use of the hands-free device on the left and on the right side of the pilot or driver of the vehicle. This can be a significant advantage for e.g. left-handed drivers of cars with the driver's seat on the left side. In this case the user can touch the hands-free device (or an inserted cellular phone) with the left hand (and vice versa for right handed people in vehicles with the drivers seat on the right side).

In yet another example embodiment of the present invention said pick-up characteristic of said microphone is substantially oriented at an angle between 35° to 75° degrees with respect to said pivot axis. In combination with a pivotability of between 90° and 270° the left and the right section of the passenger compartment can be put into the pick-up area of the directional microphone.

As stated above, said first housing component is provided with a sensor (i.e. a switch) to determine the present pivot position of said pivotable second housing component and said determined pivot position is used to activate the hands-free unit. That is, the hands-free unit is provided with a component to determine the pivot position of the second housing component and to control the operation of the hands-free unit accordingly. It is envisaged to use the pivotable housing component with the microphone as a "select lever" to take a telephone by pivoting the second housing component from an upright or vertical position into a direction to the diver (seat) or in a direction to the passenger (seat). It is also contemplated to provide a cam that can engage a respective notch at the upright position of the second housing component such that said second housing component can repeatedly be brought into a defined upright position. It may be envisaged to enable a movement of the second housing component as known from e.g. steering column switches to enable the second housing component to be moved from the driver's position to the passenger's position without interrupting a telephone call.

In another example embodiment of said hands-free unit said first housing component and said second housing component are both provided with electric interface elements and with mechanic interface elements to detachably connect said first housing component to said second housing component. In this embodiment said first housing component is provided with two of said interface elements and is able to couple said second housing component in a first position or in a second position. When connected to said first interface element said pick-up characteristic of said microphone in said second housing component is oriented in a direction to the driver seat. When coupled to said second interface element of said first housing component said pick-up characteristic of said microphone in said second housing component is oriented in a direction to the passenger seat.

This embodiment provides a simple possibility to avoid the usage of a pivot axis and movable parts. This advantage is achieved by renunciation to the pivotabilty and the ability to change the orientation of the second housing easily. However, this drawback enables the use of cheaper interfaces and more rigid electric components and prevents that e.g. the mechanical pivot connection wears out.

In a simple embodiment the electro-mechanical interface can be embodied as a first housing component with two sockets (each one directed to the drivers seat and to the passengers seat or the left or the right side of the hands-free unit) and a second housing component with a plug. That is, the second housing component can be plugged into the left or into the right side of the first housing component. If the plug or the sockets are provided with catches or pawls, this electrical connection can also provide the mechanical connection. It is also envisaged to mechanically support the second housing component only through one of said two sockets in the hands-free unit. In case that the socket is round, it is also possible to turn the second housing component by 360°. It is contemplated to use this embodiment with two second housing components and two microphones.

In yet another example embodiment of the hand-free unit said second housing component can be rigidly fixed in one position. It is contemplated to use a second housing component that is movable (turnable or repluggable) at the installation point of time, and can be fixed after the installation in the first or the second position, such that if the hands-free unit has been built in the position of the second housing component can not longer be changed. It is envisaged to enable a user to secure the second housing part in the first or second position i.e. to close the pivotability and/or the pluggability after the installation of the hands-free unit. This embodiment can be used for vehicles with the driver's seat on the right side as well as for vehicles with the driver's seat on the left side.

In another example embodiment of the present invention said hands-free unit comprises a first directional microphone and a second directional microphone. One directional microphone is the first directional microphone and is fixedly oriented in a direction to the driver seat. Said second directional microphone is arranged in said housing and is oriented in a direction to the passenger seat. The hands-free unit of the present embodiment is provided with a circuitry to select said first and/or said second directional microphone as active microphone.

This embodiment allows a kind of operation free "software solution" to fully avoid the use of movable parts in a vibrating and oscillating vehicle environment. Instead of moving a housing component one of two pre-orientated directional microphones can be selected. In a simple embodiment said circuitry to select said first and/or said second directional microphone as active microphone can be embodied as a switch on top of the housing to simply switch from the first to the second microphone or to both microphones.

In yet another example embodiment of the hands-free unit said circuitry to select said first and/or said second directional microphone as active microphone is connected to respective car sensors determining if the driver seat and/or the passenger seat is occupied, to activate said microphones accordingly. These sensors can be e.g. safety belt buckle switches to determine if the first or the second microphone or both directional microphones are to be activated.

A further example embodiment of the hands-free unit is further provided with an interface to a vehicle bus. This enables a more complex access to different vehicle applications such as accessing car sensors, car interfaces such as keyboards, displays touch screen interfaces. It may be possible to eliminate certain sources of background noise, e.g. by turning off the radio, closing the windows, limiting the rotational speed of the vehicle engine and the like. Other implementations are also envisaged such as an emergency-call automatic in case of e.g. an airbag inflation. It is also possible to power the hands-free unit via the onboard power system to operate the hands-free unit and to charge a battery pack of the cellular phone. Said interface to a vehicle bus can comprise an interface to a vehicle audio system. In the simplest case the vehicle audio system is a car radio and the interface is used to activate the "mute" function of the car radio in case of an incoming telephone call or during a telephone call. More sophisticated embodiments can be provided with an audio output to use the loudspeakers of the car audio system for outputting incoming audio telephone signals. More sophisticated embodiments can use said interface for uploading (or exchanging) audio files to the cellular phone (e.g. as a new ringing tone/tune or for feeding an in-telephone audio player).

In another example embodiment of the hands-free unit said microphone has a lobar pick-up characteristic. This enables the use of conventional directional microphones to reduce costs.

In yet another example embodiment of the hands-free unit said interface for connecting a cellular phone comprises a receptacle for a cellular phone. That is, the hands-free unit is provided with a cradle or a docking station for a mobile terminal device. This embodiment relates to the integration of a microphone into the cradle of a cellular telephone of a hands-free unit of a vehicle.

In yet another example embodiment said hands-fee unit of the present invention further comprises a mechanical interface for connecting a receptacle for a cellular phone. That is, a receptacle for a mobile telephone is connected to said hands-free unit via a mechanical interface. The mechanical interface may also comprise an electrical interface. This enables the use of a single hands-free device for cellular phones of different shape and with differently shaped electric interfaces. However, it is envisaged to use said interface for connecting a cellular phone to plug in an electrical adapter device to respective contacts in said receptacle or cradle. That is, the cradle for the cellular telephone can be provided with contacts to automatically electrically connect to said hands-free unit. It is contemplated to provide a cover to cover the mechanical structures of said interface for connecting a receptacle if no receptacle is connected.

In a further example embodiment said hands-free unit comprises a mechanical interface to a mounting plate for mounting said hands-free unit in different cars. It is also envisaged to provide a combined electro-mechanical interface to e.g. a power supply or e.g. a vehicle (data and/or audio) bus. That is, the hands-free unit of the present invention can be used in different vehicles. The use of mounting plates has the advantage that the hands-free unit can be built in different kind of cars with a minimum of changes and installation in the car. That is, the mounting plate can be removed without leaving e.g. any visible changes at the vehicle.

In one example embodiment of said hands-free unit said mechanical interface to a mounting plate is complementary to said mechanical interface for connecting a receptacle for a cellular phone. This design enables the hands-free unit to be inserted between respective interfaces of an existing cellular phone receptacle and a mounting plate combination.

The hands-free unit is visibly installed between e.g. the dashboard and the cellular phone receptacle or cradle. The microphone is an integral part of the hands-free unit and the position of the microphone can be moved or turned to either side to improve the audio quality in the up-link direction. The microphone can be made movable to either side, as there are left hand driver cars and right hand driven cars. The complete hands-free unit can be implemented very compact as it should be designed to be as unobtrusive as possible.

In another example embodiment of the present invention said hands-free unit further comprises a cellular telephone receiver and a cellular telephone transmitter. This embodiment can be provided with an external antenna and can serve to keep the passenger free of high frequency radio emissions. It is envisaged to provide e.g. a cellular phone antenna structure in the cradle and to provide an external car antenna to enable a relay-operation of the cellular telephone signal from inside the car to an external antenna.

In another example embodiment of said hands-free unit said interface for connecting a cellular phone comprises a Bluetooth interface for transferring SIM-card information from the cellular phone to the hands-free unit. It is envisaged to transfer SIM-card information from the cellular phone to the hands-free unit. In this embodiment the cellular phone in the vehicle (e.g. in the cradle or via short-range radio transmission such as Bluetooth) provides only SIM-card information to enable a complete cellular phone in the vehicle to operate and make calls. This embodiment can utilize a SIM-Access profile of Bluetooth, to enable the use of SIM card information to operate an onboard cellular telephone transceiver in the car via a high gain external antenna. This enables the use of cellular phones without any restrictions caused by Faraday effect, restricted transmission power or miniaturized antenna structures.

Said hands-free unit can also be provided with an output interface to connect an external loudspeaker. It is also envisaged to implement an internal loudspeaker in the housing of the hands-free unit. In this case it is envisaged to implement an acoustic-feedback suppression in the hands-free unit.

In yet another example embodiment of the invention said hands-free unit is provided with a user interface. User interfaces such as e.g. switches, keypads, displays, touch screens can be used to prevent that a pilot or driver of a vehicle has to use the tiny keyboards and displays of conventional miniaturized cellular phones. It is for example envisaged to implement a user interface element in a cover for a mechanic interface to a cradle for a mobile telephone in case no cradle is mounted.

In yet another additional example embodiment of the present invention said user interface comprises a light emitting diode (LED). The LED can be incorporated in said first housing element. Said LED may also be incorporated in said second housing element, e.g. in close vicinity to said microphone. This light emitting diode can be used to provide a kind of status indication, indication showing e.g. if and when the hands-free unit is connected to a power source. This light emitting diode can provide an operation indication of said microphone showing e.g. if and when the microphone is activated, muted or the hands-free unit is in an voice controlled mode, enabling for example voice dialing. It is contemplated to illuminate the status indication LED in accordance with an ignition switch signal. It is also envisaged to use a mobile telephone in cradle signal to power the status indication in accordance with an ignition switch signal. It is also possible to use a combined LED that can be illuminated, e.g. in orange in case of an activated ignition switch, and wherein the LED may be illuminated, e.g. with a green color when a cellular telephone is connected, and wherein the LED is operated in a flashing mode when an incoming call is received.

In a further example embodiment of the invention said microphone of said hands-free unit is provided with an acoustic lens. The expression "acoustic lens" has been selected to refer to any kind of focusing or defocusing device inserted between the microphone and the expected position of the driver or the +passenger.

In case of e.g. a pivotable second housing component, this may be designed in a way that a part of the support unit of the pivotable microphone serves as a focussing acoustic lens, reflector, horn or bell, wherein the microphone is arranged in the focus. This results in a pivotable acoustic reflector to achieve a desired directional characteristic of the microphone. It may also be envisaged to use a fixed microphone and only move or pivot a respective acoustic guidance element. This would enable an implementation of the hands-free unit without any necessity for bendable electric connections or sliding contacts to the microphone.

In the following, the invention will be described in detail by referring to the enclosed drawings in which:
Figure 1 shows a hands-free unit according to one embodiment of the present invention, and
Figure 2 depicts another embodiment of a hands-free unit according to the present invention.

In the detailed description that follows, identical or similar components have been given the same reference numerals, regardless of whether they are shown in different embodiments of the present invention. In order to clearly and concisely illustrate the present invention, the drawings may not necessarily be to scale and certain features may be shown in somewhat schematic form.

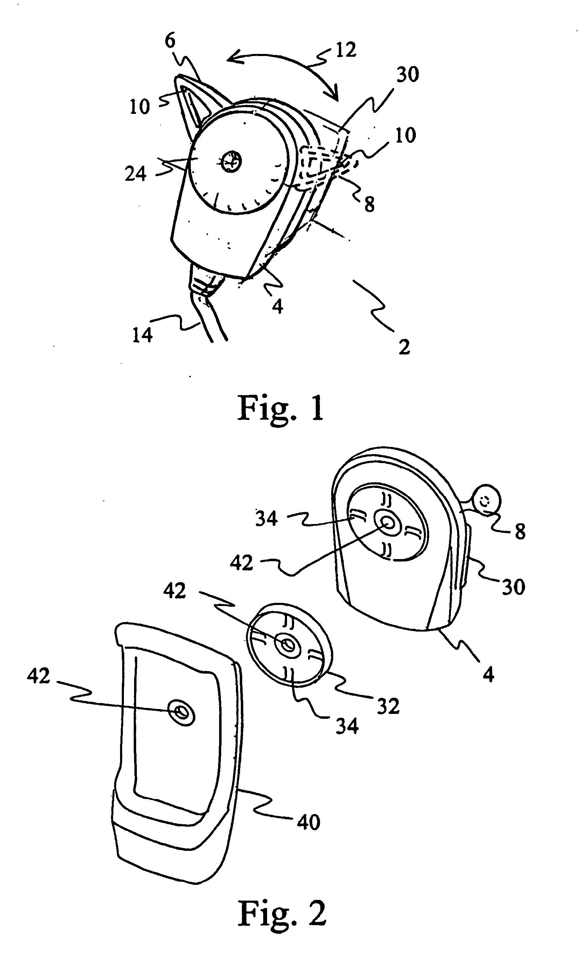

Figure 1 shows a hands-free unit according to one embodiment of the present invention. In the figure there is depicted a hands-free unit 2 mounted by a mounting plate or support element 30 on a dashboard indicated by a thin line in the background. The housing of the hands-free unit 2 comprises two different housing components, i.e. the first housing component or main housing 4 and the second housing component or microphone housing 6,8. The microphone housing 6,8 is provided with a microphone 10 behind a sound inlet. In figure 1 the microphone housing 6 is depicted in a left position suitable for a mounting position in the middle of a dashboard of a vehicle with the driver seat at the left side. This left position is also suitable for a mounting position between the steering column and the driver door in case of a car with the driver's seat at the right side of the vehicle. The microphone housing 6 can be pivoted or moved in the direction 12 from the left position, to a right position wherein the microphone housing 8 is depicted in broken lines an vice versa.

In figure 1 a cable 14 indicates an interface to a mobile telephone or other vehicle appliances. The cable can include e.g. power cable, loudspeaker, car radio (mute switch/ audio output), and an ignition signal line. A round structure 24 can be a cover for covering a mechanic interface structure to a cradle for a cellular terminal device. The round structure 24 can be embodied as a button for taking incoming telephone calls or terminating a telephone call.

Figure 2 depicts another embodiment of a hands-free unit according to the present invention.

Figure 2 shows a bell-shaped microphone housing 8 in the right position. As in figure 1 the main housing 4 can be connected to a surface with the support element 30. The depicted hands-free unit is provided with a mechanic interface with projections 34 and a through hole 42. The mechanic interface of the hands free unit can be used to mount a mobile telephone cradle 40 also provided with a through hole 42 with an adapter ring 32 to the hands-free unit. The adapter ring 32 is also provided with a through hole 42 and projections 34. The backsides of the cradle 40, the adapter ring 32 and the hands-free unit are provided with structures complementary to the structures of the interface visible on the on front side. Thereby, these components can be mounted with a screw at a mounting plate (not depicted) with a respective mechanic interface structure. This enables different "sandwich" structures of the depicted components.

The present invention is applicable in any vehicle environment. The present invention is based on the requirement to decrease the costs of installation of mounting plates. The present invention can be implemented in a highly modular manner wherein a user may select to use an installation kit for only supporting a cellular phone, use e.g. a pre-installed hands-free device of a car or e.g. a car radio equipment, or a hands-free operability of a cellular phone. It is also envisaged to upgrade such a system by adding the hands-free device to an existing mounting plate and cellular phone cradle combination. It is clearly visible that the hands-free unit can be easily removed from a car and may be re-used with another mounting plate in another car and perhaps with another telephone cradle. With the present invention there is no need for a separate microphone, which means lower material costs as well as lower installation costs.

The housing of the hands-free unit can provide a rigid construction without any "swan necks", it is small and compact to be as invisible as possible and can provide an improved audio hands-free quality due to the movable microphone. The microphone has got a special directional characteristic that can be pointed directly to the user i.e. the pilot/driver, co-pilot or passenger.

This application contains the description of implementations and embodiments of the present invention with the help of examples. It will be appreciated by a person skilled in the art that the present invention is not restricted to details of the embodiments presented above, and that the invention can also be implemented in another form without deviating from the characteristics of the invention. The embodiments presented above should be considered illustrative, but not restricting. Thus the possibilities of implementing and using the invention are only restricted by the enclosed claims. Consequently various options of implementing the invention as determined by the claims, including equivalent implementations, also belong to the scope of the invention.

## Claims

1. Hands-free unit for use of communication devices in vehicles, comprising:
- means for converting acoustic signals into electrical signals, said means for converting having a directional pick-up characteristic,
- interface means for connecting a cellular phone,
- means for accommodating said means for converting, wherein said means for accommodating comprises a first housing component and a second housing component, and wherein said second housing component is pivotable around an axis and includes said means for converting,
- **characterized in that** said first housing component is further provided with a sensor for determining the pivot position of said pivotable second housing component, and wherein said determined pivot position is used to control the operation of said hands-free unit.

2. Hands-free unit according to claim 1 further comprising
- means to electrically connect said means for converting.

3. Hands-free unit according to claim 1 or 2, **characterized by** means to orient a pick-up characteristic of said means for converting in a direction towards the driver's seat or in a direction towards the passenger's seat.

4. Hands-free unit according to claim 3, **characterized in that** said means for converting is orientable.

5. Hands-free unit according to any previous claim, **characterized in that** said second housing component is pivotable around an axis within an angle of between 90 and 270 degrees.

6. Hands-free unit according to claim 5, wherein said pick-up characteristic of said means for converting is substantially oriented at an angle between 35 to 75 degrees with respect to said pivot axis.

7. Hands-free unit according to any of the previous claims, wherein said determined pivot position is used to activate the hands-free unit.

8. Hands-free unit according any previous claim, **characterized in that** said first housing component and said second housing component are both provided with electric and mechanic interface means for detachably connecting said first housing component to said second housing component, said first housing component being provided with two of said interface means for connecting said first housing component in a first position or in a second position,
wherein in said first position said pick-up characteristic of said means for converting in said second housing component is oriented in a direction towards the driver's seat and in said second position said pick-up characteristic of said means for converting in said second housing component is oriented in a direction towards the passenger's seat.

9. Hands-free unit according to any previous claim, **characterized in that** said second housing component can be rigidly fixed in one position.

10. Hands-free unit according to any one of the preceding claims, further comprising interface means for connecting said hands-free unit to a vehicle bus.

11. Hands-free unit according to any one of the preceding claims, wherein said means for converting has a lobar pick-up characteristic.

12. Hands-free unit according to any one of the preceding claims, wherein said interface means for connecting a cellular phone comprises a receptacle for a cellular phone.

13. Hands-free unit according to any one of the preceding claims, further comprising a mechanical interface means for connecting a receptacle for a cellular phone.

14. Hands-free unit according to any one of the preceding claims, further comprising a mechanical interface means for mounting said hands-free unit to a mounting plate of a car.

15. Hands-free unit according to claim 14 when dependent on claim 13, **characterized in that** said mechanical interface means for mounting said hands-free unit to a mounting plate of a car is complementary to said mechanical interface means for connecting a receptacle for a cellular phone.

16. Hands-free unit according to anyone of the preceding claims, further comprising a cellular telephone receiver and a cellular telephone transmitter.

17. Hands-free unit according to claim 16, wherein said interface means for connecting a cellular phone comprises a Bluetooth interface means for transferring SIM-card information from the cellular phone to the hands-free unit.

18. Hands-free unit according to anyone of the preceding claims, further comprising a user interface means.

19. Hands-free unit according to 18, wherein said user interface comprises means for providing status indication or operation indication.

20. Hands-free unit according to 18 or 19, wherein said user interface means and or said means for providing status indication or operation indication comprises diode means for emitting light.

21. Hands-free unit according to anyone of the preceding claims, wherein said means for converting is provided with means for focusing or defocusing acoustics.

22. Hands-free unit according to any previous claims further comprising means to comprise a processing unit, amplifiers and electrical connectors, voltage transformers, power adaptors, fuses, volume controls and indication lights.

23. Hands-free unit according to anyone of the preceding claims, further comprising a computer program comprising computer code means which is configured to be executed on said processing unit top control at least a part of the functionalities of the Hands-free unit.

24. Method for operating a hands-free unit according to anyone of the preceding claims, said method comprising
- determining the pivot position of said pivotable second housing component, and
- controlling said hands-free unit according to said determined pivot position of said pivotable second housing component.

25. Method for operating a hands-free unit according to claim 24,wherein said method comprises
- determining a pivoting of said pivotable second component housing component from an upright or vertical position into a direction to the diver (seat) or in a direction to the passenger (seat) and
- taking a telephone call in response to said determining.

26. Method for operating a hands-free unit according to any one of claims 24 or 25, further comprising transferring SIM-card information from the cellular phone to the hands-free unit.

27. Computer program comprising computer program code means adapted to perform the steps of claims 24 to 26, when said program is run on a processing device.

## Patentansprüche

1. Freisprecheinheit zur Verwendung von Kommunikationsvorrichtungen in Fahrzeugen, umfassend:
- Mittel zum Umwandeln akustischer Signale in elektrische Signale, wobei die Mittel zum Umwandeln eine gerichtete Aufnahmecharakteristik aufweisen;
- Schnittstellenmittel zum Verbinden mit einem Mobiltelefon;
- Mittel zum Unterbringen der Mittel zum Umwandeln, wobei das Mittel zum Unterbringen eine erste Gehäusekomponente und eine zweite Gehäusekomponente umfasst, und wobei die zweite Gehäusekomponente um eine Achse schwenkbar ist und das Mittel zum Umwandeln umfasst;
- **dadurch gekennzeichnet, dass** die erste Gehäusekomponente außerdem mit einem Sensor zum Bestimmen der Schwenkposition der schwenkbaren zweiten Gehäusekomponente versehen ist, und wobei die bestimmte Schwenkposition verwendet wird, um den Betrieb der Freisprecheinheit zu steuern.

2. Freisprecheinheit nach Anspruch 1, weiter umfassend
- Mittel zum elektrischen Verbinden der Mittel zum Umwandeln.

3. Freisprecheinheit nach Anspruch 1 oder 2, **gekennzeichnet durch** Mittel zum Ausrichten einer Aufnahmecharakteristik des Mittels zum Umwandeln in Richtung des Fahrersitzes oder in Richtung des Beifahrersitzes.

4. Freisprecheinheit nach Anspruch 3, **dadurch gekennzeichnet, dass** das Mittel zum Umwandeln ausgerichtet werden kann.

5. Freisprecheinheit nach einem der vorherigen Ansprüche, **dadurch gekennzeichnet, dass** die zweite Gehäusekomponente um eine Achse innerhalb eines Winkels zwischen 90 und 270 Grad schwenkbar ist.

6. Freisprecheinheit nach Anspruch 5, wobei die Aufnahmecharakteristik des Mittels zum Umwandeln im wesentlichen in einem Winkel von 35 bis 75 Grad in Bezug auf die Schwenkachse ausgerichtet ist.

7. Freisprecheinheit nach einem der vorherigen Ansprüche, wobei die bestimmte Schwenkposition zur Aktivierung der Freisprecheinheit verwendet wird.

8. Freisprecheinheit nach einem der vorherigen Ansprüche, **dadurch gekennzeichnet, dass** sowohl die erste Gehäusekomponente wie auch die zweite Gehäusekomponente mit elektrischen und mechanischen Schnittstellenmitteln versehen sind, um die erste Gehäusekomponente lösbar mit der zweiten Gehäusekomponente zu verbinden, wobei die erste Gehäusekomponente mit zwei der Schnittstellenmittel versehen ist, um die erste Gehäusekomponente in einer ersten Position oder in einer zweiten Position zu verbinden,
wobei in der ersten Position die Aufnahmecharakteristik des Mittels zum Umwandeln in der zweiten Gehäusekomponente in Richtung des Fahrersitzes ausgerichtet ist und in der zweiten Position die Aufnahmecharakteristik des Mittels zum Umwandeln in der zweiten Gehäusekomponente in Richtung des Beifahrersitzes ausgerichtet ist.

9. Freisprecheinheit nach einem der vorhergehenden Ansprüche, **dadurch gekennzeichnet, dass** die zweite Gehäusekomponente starr in einer Position fixiert werden kann.

10. Freisprecheinheit nach einem der vorhergehenden Ansprüche, weiter umfassend Schnittstellenmittel zum Verbinden der Freisprecheinheit mit einer Fahrzeugsammelleitung.

11. Freisprecheinheit nach einem der vorhergehenden Ansprüche, wobei das Mittel zum Umwandeln eine keulenförmige Aufnahmecharakteristik aufweist.

12. Freisprecheinheit nach einem der vorhergehenden Ansprüche, wobei das Schnittstellenmittel zum Verbinden mit einem Mobiltelefon eine Aufnahme für ein Mobiltelefon umfasst.

13. Freisprecheinheit nach einem der vorhergehenden Ansprüche, weiter umfassend ein mechanisches Schnittstellenmittel zum Verbinden mit einer Aufnahme für ein Mobiltelefon.

14. Freisprecheinheit nach einem der vorhergehenden Ansprüche, weiter umfassend ein mechanisches Schnittstellenmittel zum Befestigen der Freisprecheinheit an einer Befestigungsplatte eines Autos.

15. Freisprecheinheit nach Anspruch 14 wenn abhängig von Anspruch 13, **dadurch gekennzeichnet, dass** das mechanische Schnittstellenmittel zum Befestigen der Freisprecheinheit an einer Befestigungsplatte eines Autos komplementär zu dem mechanischen Schnittstellenmittel zum Verbinden mit einer Aufnahme für ein Mobiltelefon ist.

16. Freisprecheinheit nach einem der vorhergehenden Ansprüche, weiter umfassend einen Mobiltelefonempfänger und einen Mobiltelefonsender.

17. Freisprecheinheit nach Anspruch 16, wobei das Schnittstellenmittel zum Verbinden mit einem Mobiltelefon ein Bluetooth-Schnittstellenmittel zum Übertragen von SIM-Karten-Informationen von dem Mobiltelefon an die Freisprecheinheit umfasst.

18. Freisprecheinheit nach einem der vorhergehenden Ansprüche, weiter umfassend ein Benutzerschnittstellenmittel.

19. Freisprecheinheit nach Anspruch 18, wobei die Benutzerschnittstelle Mittel zum Bereitstellen von Statusanzeigen oder Funktionsanzeigen umfasst.

20. Freisprecheinheit nach Anspruch 18 oder 19, wobei das Benutzerschnittstellenmittel und/oder das Mittel zum Bereitstellen von Statusanzeigen oder Funktionsanzeigen Diodenmittel zum Aussenden von Licht umfasst.

21. Freisprecheinheit nach einem der vorhergehenden Ansprüche, wobei das Mittel zum Umwandeln mit Mitteln zum Fokussieren oder Defokussieren von Akustik versehen ist.

22. Freisprecheinheit nach einem der vorhergehenden Ansprüche, weiter umfassend Mittel, die eine Verarbeitungseinheit, Verstärker und elektrische Stecker, Spannungswandler, Stromadapter, Sicherungen, Lautstärkeregler und Anzeigeleuchten umfassen können.

23. Freisprecheinheit nach einem der vorhergehenden Ansprüche, weiter umfassend ein Computerprogramm, welches Computercodemittel umfasst, die dazu eingerichtet sind, auf der Verarbeitungseinheit ausgeführt zu werden, um mindestens einen Teil der Funktionen der Freisprecheinheit zu steuern.

24. Verfahren zum Betreiben einer Freisprecheinheit nach einem der vorhergehenden Ansprüche, wobei das Verfahren umfasst:
- Bestimmen der Schwenkposition der schwenkbaren zweiten Gehäusekomponente, und
- Steuern der Freisprecheinheit gemäß der bestimmten Schwenkposition der schwenkbaren zweiten Gehäusekomponente.

25. Verfahren zum Betreiben einer Freisprecheinheit nach Anspruch 24, wobei das Verfahren umfasst
- Bestimmen einer Schwenkung der schwenkbaren zweiten Gehäusekomponente aus einer aufrechten oder vertikalen Position in Richtung des Fahrersitzes oder in Richtung des Beifahrersitzes, und
- Annehmen eines Telefonanrufs in Reaktion auf die Bestimmung.

26. Verfahren zum Betreiben einer Freisprecheinheit gemäß einem der Ansprüche 24 oder 25, weiter umfassend das Übertragen von SIM-Karten-Informationen von dem Mobiltelefon an die Freisprecheinheit.

27. Computerprogramm umfassend Computerprogramm-Codemittel, die angepasst sind, die Schritte der Ansprüche 24 bis 26 durchzuführen, wenn das Programm auf einer Verarbeitungsvorrichtung ausgeführt wird.

## Revendications

1. Unité mains libres pour se servir de dispositifs de communication dans des véhicules, comprenant :
- des moyens pour convertir des signaux acoustiques en signaux électriques, lesdits moyens pour convertir ayant une caractéristique de captation directionnelle,
- des moyens d'interface pour connecter un téléphone cellulaire,
- des moyens pour loger lesdits moyens pour convertir, dans lequel lesdits moyens pour loger comprennent un premier composant de logement et un second composant de logement, et dans lequel ledit composant de logement est capable de pivoter autour d'un axe et inclut lesdits moyens pour convertir,
- **caractérisée en ce que** ledit premier composant de logement est en outre pourvu d'un capteur pour déterminer la position de pivot dudit second composant de logement capable de pivoter, et dans lequel ladite position de pivot déterminée est utilisée pour commander le fonctionnement de ladite unité mains libres.

2. Unité mains libres selon la revendication 1 comprenant en outre
- des moyens pour connecter électriquement lesdits moyens pour convertir.

3. Unité mains libres selon les revendications 1 ou 2, **caractérisée par** des moyens pour orienter une caractéristique de captation desdits moyens pour convertir dans une direction vers le siège du conducteur ou dans une direction vers le siège du passager.

4. Unité mains libres selon la revendication 3, **caractérisée en ce que** lesdits moyens pour convertir sont orientables.

5. Unité mains libres selon l'une quelconque des revendications précédentes, **caractérisée en ce que** ledit second composant de logement est capable de pivoter autour d'un axe selon un angle compris entre 90 et 270 degrés.

6. Unité mains libres selon la revendication 5, dans lequel ladite caractéristique de captation desdits moyens pour convertir est essentiellement orientée selon un angle compris entre 35 et 75 degrés par rapport audit axe de pivot.

7. Unité mains libres selon l'une quelconque des revendications précédentes, dans laquelle ladite position de pivot déterminée est utilisée pour activer l'unité mains libres.

8. Unité mains libres selon l'une quelconque des revendications précédentes, **caractérisée en ce que** ledit premier composant de logement et ledit second composant de logement sont tous les deux pourvus de moyens d'interface électriques et mécaniques pour connecter de façon séparée ledit premier composant de logement audit second composant de logement, ledit premier composant de logement étant pourvu de deux desdits moyens d'interface pour connecter ledit premier composant de logement dans une première position ou dans une seconde position,
dans lequel, dans ladite première position, ladite caractéristique de captation desdits moyens pour convertir dans ledit second composant de logement est orientée dans une direction vers le siège du conducteur et dans ladite seconde position, ladite caractéristique de captation desdits moyens pour convertir dans ledit second composant de logement est orientée dans une direction vers le siège du passager.

9. Unité mains libres selon l'une quelconque des revendications précédentes, **caractérisée en ce que** ledit composant de logement peut être fixé de façon rigide dans une position.

10. Unité mains libres selon l'une quelconque des revendications précédentes, comprenant en outre des moyens d'interface pour connecter ladite unité mains libres à un bus de véhicule.

11. Unité mains libres selon l'une quelconque des revendications précédentes, dans laquelle lesdits moyens pour convertir ont une caractéristique de captation lobaire.

12. Unité mains libres selon l'une quelconque des revendications précédentes, dans laquelle lesdits moyens d'interface pour connecter un téléphone cellulaire comprennent un réceptacle pour un téléphone cellulaire.

13. Unité mains libres selon l'une quelconque des revendications précédentes, comprenant en outre des moyens d'interface mécaniques pour connecter un réceptacle pour un téléphone cellulaire.

14. Unité mains libres selon l'une quelconque des revendications précédentes, comprenant en outre des moyens d'interface mécaniques pour monter ladite unité mains libres sur une plaque de montage d'une voiture.

15. Unité mains libres selon la revendication 14 lorsqu'elle est dépendante de la revendication 13, **caractérisée en ce que** lesdits moyens d'interface mécaniques pour monter ladite unité mains libres sur une plaque de montage d'une voiture sont complémentaires desdits moyens d'interface mécaniques pour connecter un réceptacle pour un téléphone cellulaire.

16. Unité mains libres selon l'une quelconque des revendications précédentes, comprenant en outre un récepteur de téléphone cellulaire et un émetteur de téléphone cellulaire.

17. Unité mains libres selon la revendication 16, dans laquelle lesdits moyens d'interface pour connecter un téléphone cellulaire comprennent des moyens d'interface Bluetooth pour transférer des informations de carte SIM depuis le téléphone cellulaire vers l'unité mains libres.

18. Unité mains libres selon l'une quelconque des revendications précédentes, comprenant en outre des moyens d'interface utilisateur.

19. Unité mains libres selon la revendication 18, dans laquelle ladite interface utilisateur comprend des moyens pour fournir des indications de statuts ou des indications de fonctionnement.

20. Unité mains libres selon les revendications 18 ou 19, dans lequel lesdits moyens d'interface et ou lesdits moyens pour fournir des indications de statuts ou des indications de fonctionnement comprennent des moyens de diode pour émettre de la lumière.

21. Unité mains libres selon l'une quelconque des revendications précédentes, dans laquelle lesdits moyens pour convertir sont pourvus de moyens pour concentrer ou déconcentrer l'acoustique.

22. Unité mains libres selon l'une quelconque des revendications précédentes, comprenant en outre des moyens pour comprendre une unité de traitement, des amplificateurs et des connecteurs électriques, des transformateur de tension, des adaptateurs de puissance, des fusibles, des commandes de volume et des lumières d'indication.

23. Unité mains libres selon l'une quelconque des revendications précédentes, comprenant en outre un programme d'ordinateur comprenant des moyens de code d'ordinateur qui sont configurés pour être exécutés sur ladite unité de traitement pour commander au moins une partie des fonctionnalités de l'unité mains libres

24. Procédé pour exploiter une unité mains libres selon l'une quelconque des revendications précédentes, ledit procédé comprenant les étapes consistant à :
- déterminer la position de pivot dudit second composant de logement capable de pivoter, et
- commander ladite unité mains libres selon ladite position de pivot déterminée dudit second composant de logement capable de pivoter.

25. Procédé pour exploiter une unité mains libres selon la revendication 24, dans lequel ledit procédé comprend les étapes consistant à :
- déterminer un pivotement dudit second composant de logement capable de pivoter depuis une position supérieure droite ou verticale dans une direction vers le siège du conducteur ou en direction du siège passager, et
- prendre un appel téléphonique en réponse à ladite détermination.

26. Procédé pour exploiter une unité mains libres selon l'une quelconque des revendication 24 ou 25, comprenant en outre l'étape consistant à transférer des informations de carte SIM depuis le téléphone cellulaire vers l'unité mains libres.

27. Programme d'ordinateur comprenant des moyens de code de programme d'ordinateur adaptés pour effectuer les étapes des revendications 24 à 26, lorsque ledit programme est exécuté sur un dispositif de traitement.
